# EUROPÄISCHE PATENTSCHRIFT

(11) **EP 1 334 930 B1**
(45) Veröffentlichungstag und Bekanntmachung des Hinweises auf die Patenterteilung: **24.11.2004**
(21) Anmeldenummer: 02002546.6
(22) Anmeldetag: 04.02.2002
(51) Int. Cl.: B65G 57/22

(54) **Verfahren und Vorrichtung zum Stapeln von Formatzuschnitten**
Method and device for stacking cut plates
Procédé et dispositif pour empiler des panneaux découpés

(43) Veröffentlichungstag der Anmeldung: 13.08.2003
(73) Patentinhaber: Siempelkamp Handling Systeme GmbH & Co., 82515 Wolfratshausen (DE)
(72) Erfinder:
(74) Vertreter: Szynka, Dirk

(56) Entgegenhaltungen:
- EP-A- 0 146 643
- EP-A- 1 155 984
- DE-A- 3 210 490
- DE-A- 3 541 743
- PATENT ABSTRACTS OF JAPAN vol. 007, no. 244 (M-252), 28. Oktober 1983 (1983-10-28) -& JP 58 130823 A (OKURA YUSOKI KK), 4. August 1983 (1983-08-04)

## Beschreibung

Die vorliegende Erfindung bezieht sich auf ein Verfahren und eine Vorrichtung zum Abstapeln von Formatzuschnitten aus Platten.

Der Begriff "Platten" ist dabei sehr allgemein zu verstehen und bezieht sich grundsätzlich auf alle Plattenmaterialien, bei denen eine Aufteilung von vergleichsweise großen Formaten, die bei der Herstellung anfallen, in kleinere Formatzuschnitte zur Weiterverarbeitung in Frage kommt. Insbesondere bezieht sich die Erfindung dabei auf beschichtete und unbeschichtete Span-, OSB-, MDFund andere Faserplatten, Gipsplatten, Mineralplatten und ganz allgemein auf Platten aus Holz, Kunststoff, Metall und daraus zusammengesetzen Materialien.

Dabei werden sogenannte Aufteilanlagen verwendet, um die Großformate als Einzelplatte oder im Paket mit Scheren, Sägen und dergleichen zuzuschneiden. Der Zuschnitt wird durch einen oder mehrere sogenannten Schnittpläne bestimmt, die in Kommissionen zusammengefasst, meistens computerberechnet und im Hinblick auf eine optimale Ausnutzung des zur Verfügung stehenden Großformats optimiert sind (sogenannte Schnittplanoptimierung). In anderen Worten soll unter Beachtung der gefragten Formatzuschnitte ein minimaler Verschnitt übrig bleiben. Dabei ist die Anordnung der einzelnen Formatzuschnitte im Schnittplan also bestimmt durch die Verschnittminimierung. Außerdem wird durch die Schnittplanoptimierung gewährleistet, dass zur Ist-Zeit nur eine definierte Anzahl von unterschiedlichen Formaten in Bearbeitung sind (sogenannte offene Positionen).

Andererseits sollen die Formatzuschnitte vor der Auslieferung abgestapelt werden, wobei häufig mehrere Formatzuschnitte nebeneinander in einer Stapelebene liegen. Man spricht dabei von einem Stapelbild. Das Stapelbild innerhalb eines Stapels ist konstant. Jedenfalls wird es aus Formatzuschnitten gebildet, die entweder gleichartig sind oder zumindest aus bestimmten Gründen zusammengehören.

Insgesamt kann also die Anordnung der Formatzuschnitte in den Stapelbildern völlig abweichen von der Anordnung derselben Formatzuschnitte im Schnittplan. Dementsprechend werden die Formatzuschnitte nach dem Aufteilen des Großformats soweit vereinzelt wie notwendig und dann zu Stapelbildern neu zusammengefügt. Die aus den Stapelbildem aufgebauten Stapel werden, wenn sie abgeschlossen sind, abtransportiert und anderweitig weiterverarbeitet.

Eine Anlage mit einer Vorrichtung zum Zusammenstellen von Stapelbildern und mit Stapelplätzen zum Abstapeln der Stapelbilder ist beispielsweise aus der DE 199 09 001 derselben Anmelderin bekannt geworden. Es existiert jedoch auch eine Vielzahl anderer Dokumente, in denen verschiedene Bautypen solcher Zusammenstellvorrichtungen und/oder Stapelvorrichtungen dargestellt sind.

Der Stand der Technik umfasst insbesondere auch die DE 35 41 743 A1, aus der sich ein Verfahren und eine Vorrichtung zum Abstapeln von Formatzuschnitten auf einem Stapelplatz ergeben, wobei Formatzuschnitte mit einer Transportbahn entlang einer X-Richtung zu Winkelstationen transportiert werden, von denen zugeordnete Aufnahmestationen in einer Y-Richtung beabstandet sind. Von den Aufnahmestationen können die Formatzuschnitte durch einen entlang der X-Richtung und einer vertikalen Z-Richtung translatorisch verfahrbaren Manipulationsroboter aufgenommen und entlang der X-Richtung zu jeweiligen Stapelplätzen zugeführt und dort in Stapelbilder zusammenstellender Weise abgelegt werden.

Der vorliegenden Erfindung liegt das technische Problem zu Grunde, eine verbesserte Vorrichtung und verbessertes Verfahren zum Abstapeln von Formatzuschnitten anzugeben.

Erfindungsgemäß wird dieses Problem gelöst durch ein Verfahren zum Abstapeln von Formatzuschnitten aus Platten auf einem Stapelplatz zu einem Stapel mit den Schritten: Transportieren der Formatzuschnitte zu einer Mehrzahl Aufnahmestationen mit einer Transportbahn entlang einer X-Richtung, wobei die Aufnahmestationen einem jeweiligen Stapelplatz zugeordnet, in der X-Richtung nebeneinander angeordnet und einer jeweiligen Winkelstation der Transportbahn zum Umlenken der Formatzuschnitte in eine zu der X-Richtung senkrechte Y-Richtung zugeordnet sind, Aufnehmen der Formatzuschnitte mit einem Manipulationsroboter an den Aufnahmestationen, Zuführen der Formatzuschnitte zu dem Stapelplatz mit dem Manipulationsroboter, Ablegen der Formatzuschnitte auf dem Stapelplatz mit dem Manipulationsroboter in solcher Weise, dass bei dem Ablegen mit den Formatzuschnitten ein Stapelbild des Stapels zusammengestellt wird, wobei der Manipulationsroboter drei translatorische Achsen aufweist und entlang der ersten translatorischen Achse entlang der X-Richtung verschoben wird, um die jeweiligen Aufnahmestationen und die jeweiligen Stapelplätze zu erreichen, der Manipulationsroboter entlang der zweiten translatorischen Achse entlang der Y-Richtung verschoben wird, um sich von einer Aufnahmestation zu dem jeweiligen zugeordneten Stapelplatz und umgekehrt zu bewegen, und sich der Manipulationsroboter entlang der dritten translatorischen Achse senkrecht zu der X-Richtung und zu der Y-Richtung bewegt, um Formatzuschnitte von einer Aufnahmestation aufzunehmen und um Formatzuschnitte auf einem Stapelplatz abzulegen.

Gleichermaßen bezieht sich die Erfindung auch auf eine entsprechende Vorrichtung zum Abstapeln von Formatzuschnitten aus Platten auf einem Stapelplatz zu einem Stapel mit einem Stapelplatz, einem Manipulationsroboter, der dazu ausgelegt ist, Formatzuschnitte aufzunehmen, dem Stapelplatz zuzuführen und auf dem Stapelplatz in solcher Weise abzulegen, dass bei dem Ablegen mit den Formatzuschnitten ein Stapelbild des Stapels zusammengestellt wird, einer Mehrzahl Aufnahmestationen und einer Transportbahn zum Transportieren von Formatzuschnitten zu den jeweiligen Aufnahmestationen entlang einer X-Richtung, wobei die Aufnahmestationen einem jeweiligen Stapelplatz zugeordnet, in der X-Richtung nebeneinander angeordnet und einer jeweiligen Winkelstation der Transportbahn zum Umlenken der Formatzuschnitte in eine zu der X-Richtung senkrechte Y-Richtung zugeordnet sind, wobei der Manipulationsroboter drei translatorische Achsen aufweist, wobei die erste translatorische Achse des Manipulationsroboters entlang der X-Richtung orientiert ist und der Manipulationsroboter entlang der ersten Achse verschoben werden kann, um die jeweiligen Aufnahmestationen und die jeweiligen Stapelplätze zu erreichen, die zweite translatorische Achse des Manipulationsroboters entlang der Y-Richtung orientiert ist und der Manipulationsroboter entlang der zweiten Achse verschoben werden kann, um sich von einer Aufnahmestation zu dem jeweiligen zugeordneten Stapelplatz und umgekehrt zu bewegen, und die dritte translatorische Achse des Manipulationsroboters senkrecht zu der X-Richtung und zu der Y-Richtung orientiert ist und sich der Manipulationsroboter entlang der dritten Achse bewegen kann, um Formatzuschnitte von einer Aufnahmestation aufzunehmen und um Formatzuschnitte auf einem Stapelplatz abzulegen.

Ein besonderer Aspekt der Erfindung betrifft das Herstellungsverfahren für die erfindungsgemäße Vorrichtung gemäß Anspruch 6.

Bevorzugte Ausgestaltungen sind in den abhängigen Ansprüchen angegeben und ergeben sich aus der folgenden Beschreibung. Dabei ist die Gesamtoffenbarung einschließlich der Ausführungsbeispiele grundsätzlich sowohl im Hinblick auf die Verfahrenskategorie als auch die Vorrichtungskategorie zu verstehen.

Der Grundgedanke der Erfindung besteht darin, den Vorgang der Zusammenstellung von Stapelbildern und des Abstapelns der Stapelbilder zu einem Stapel zu vereinheitlichen und eine Vorrichtung anzugeben, die beide Vorgänge vereinheitlicht durchführt. Dazu ist ein Manipulationsroboter vorgesehen, der Formatzuschnitte an einem Aufnahmeplatz aufnehmen kann, um sie einem Stapelplatz zuzuführen. Zunächst ist dabei klarzustellen, dass hier und im Folgenden vereinfachend von Formatzuschnitten gesprochen wird, wobei es sich dabei sowohl um einzelne Formatzuschnitte als auch um Gruppen von Formatzuschnitten handeln kann. Dabei können zum einen in den Ebenen der Stapelbilder (also in der Horizontalen) zwei oder mehrere einzelne Formatzuschnitte nebeneinander liegen, die noch kein vollständiges Stapelbild ergeben, aber beispielsweise schon in dem Schnittplan in dieser Form nebeneinander lagen und daher nicht vereinzelt wurden. Außerdem ist es üblich, die bei der Herstellung anfallenden großen Formate paketweise zu zerschneiden, so dass die Formatzuschnitte in einer (vertikal) gestapelten Paketform auftreten können. Diese Pakete sollen jedoch begrifflich nicht mit den an dem Stapelplatz zu erstellenden Stapeln verwechselt werden. Die Höhe der Pakete ist auf einige Lagen beschränkt und erheblich geringer als die der endgültigen Stapel. Der hier verwendete Begriff der Formatzuschnitte kann also insgesamt in vertikaler und/oder in horizontaler Weise eine Mehrzahl Formatzuschnitte meinen.

Wenn der Manipulationsroboter die Formatzuschnitte dem Stapelplatz zugeführt hat, legt er diese auf dem Stapelplatz, das heißt gegebenenfalls auch auf bereits dort abgestapelten Formatzuschnitten, ab. Wesentlich ist dabei, dass der Vorgang des Ablegens der Formatzuschnitte auf dem Stapelplatz zum einen die Zahl der Formatzuschnitte in dem Stapel erhöht, also "Abstapeln" bedeutet, und zum anderen ein Stapelbild beginnt oder ergänzt oder fertig stellt, also "Stapelbild Zusammenstellen" bedeutet. Der erfindungsgemäße Manipulationsroboter fasst also beide Aspekte zusammen. Im Stand der Technik wurden diese Aspekte jedoch getrennt gehandhabt.

Ein weiteres Merkmal der Erfindung besteht darin, dass dieser Manipulationsroboter zumindest drei translatorische Bewegungsachsen aufweist. Der Manipulationsroboter, d.h. ein Teil desselben, ist also translatorisch entlang einer Strecke verfahrbar. Diese erste translatorische Achse hat verschiedene wesentliche Vorteile. Zum einen ist sie grundsätzlich in ihrer Länge sehr flexibel, kann also bei Bedarf auch einen sehr weiten Bewegungsbereich abdecken. Zum zweiten lassen sich translatorisch verfahrbare Roboterkonstruktionen, insbesondere sogenannte Portalroboter, im Rahmen der translatorischen Freiheitsgrade sehr viel besser mit hohen Tragfähigkeiten ausstatten. Insbesondere besteht bei translatorischen Achsen kein grundsätzlicher Widerspruch zwischen einer hohen Tragkraft und einem großen abdeckbaren Bereich. Im Gegensatz dazu lässt sich mit einer rotatorischen Achse ein Winkelbereich von max. 360° abdecken, der dann lediglich durch eine Vergrößerung des maximal erfassbaren Radius zu einem großen Wegbereich erweitert werden kann. Die Größe des Radius begrenzt jedoch in erheblichem Maße die Tragfähigkeit des Manipulationsroboters. Dennoch sind Manipulationsroboter mit rotatorischen Achsen, insbesondere sogenannte Gelenkroboter, auf Grund ihrer geringen Baugröße und Flexibilität sehr stark verbreitet. Zudem sind sie konstruktionsbedingt und in Folge ihrer starken Verbreitung vergleichsweise sehr preisgünstig.

Die Erfinder haben jedoch erkannt, dass sich mit translatorischen Achsen gerade bei der Handhabung von Formatzuschnitten und Formatzuschnittgruppen erhebliche Gewinne durch vergleichsweise große Manipulationsgeschwindigkeiten bei nicht unerheblichen Lasten erzielen lassen, die die unvermeidlichen Mehrkosten deutlich rechtfertigen. In Kombination mit dem Erfindungsaspekt des Vereinheitlichens der Stapelbildzusammenstellung und des Abstapelns ergibt sich ein für die Stapelherstellung bei Formatzuschnitten aus Platten völlig neues und sehr leistungsfähiges Konzept.

Wenn es sich, vorzugsweise, um die jeweils ersten Achsen des Manipulationsroboters (d.h. um die erste bis dritte Achse) handelt, so spricht man häufig von einem Flächenportalroboter.

Natürlich sind bei dem erfindungsgemäßen Manipulationsroboter rotatorische Achsen nicht ausgeschlossen. Wie das Ausführungsbeispiel zeigt, ist zumindest eine rotatorische Achse, die dort zusammen mit der dritten translatorischen Achse implementiert ist, bevorzugt, um ein Manipulationswerkzeug des Roboters in der Horizontalen drehen zu können. Dadurch können die Formatzuschnitte beim Zusammenstellen des Stapelbildes auch (in der Regel um 90°) gedreht werden, wenn dies das Stapelbild erfordert. Die konventionellerweise ebenfalls getrennt implementierte Drehvorrichtung kann also ebenfalls in dem Manipulationsroboter integriert sein. Eine weitere rotatorische Achse kann auch mit der Greif- oder Anhebe-/Ablegefunktion eines Manipulationswerkzeugs verbunden sein, wie das Ausführungsbeispiel ebenfalls verdeutlicht.

Weiterhin kann eine Transportbahn vorgesehen sein, die die Formatzuschnitte zu einer oder mehreren Aufnahmestationen antransportiert, beispielsweise eine Rollentransportbahn oder Riementransportbahn. Diese Transportbahn kann zum einen die Formatzuschnitte von einer Trennvorrichtung, etwa einer Säge, herantransportieren, die an dem Zerschneiden der bei der Herstellung anfallenden großen Formate in die Formatzuschnitte beteiligt ist. Dabei ist dann vorzugsweise entlang einer von der Säge kommenden Richtung der Transportbahn, die im Folgenden als X-Richtung bezeichnet wird, eine Möglichkeit zum Vereinzelnen der Formatzuschnitte in dieser X-Richtung vorgesehen. Beispielsweise kann dies am Übergang einer an der Säge angeordneten Transportbahn zu der hier beschriebenen Transportbahn der Fall sein. Diese beiden Transportbahnen können voneinander unabhängig ansteuerbar sein, so dass sie an ihrer Grenze als Referenzkante die entsprechenden Trennlinien positionieren und dann die bereits stromabwärts von der Trennlinie liegenden Formatzuschnitte von der Referenzkante wegtransportieren können. Diese Vereinzelvorgänge sind an sich gut bekannt und müssen hier nicht näher erläutert werden.

Von der X-Erstreckung der Transportbahn führt dann vorzugsweise zumindest eine Winkelstation, die eine Umlenkung der Transportrichtung in eine zu der X-Richtung senkrechte Y-Richtung vornimmt, zu einer Abzweigung der Transportbahn und einer Aufnahmestation. Die Winkelstation ist ebenfalls an sich bekannt und kann in verschiedener Weise ausgeführt werden. Beispielsweise kann es sich um eine Konstruktion mit zwischen Rollen der Transportbahn in X-Richtung versenkbaren Ketten oder Riemen handeln, die zwischen den Rollen auf- und abgefahren werden können, um Formatzuschnitte in Y-Richtung abzutransportieren. Dabei können die Ketten oder Riemen Nocken oder andere Erhöhungen aufweisen, die nur an einem Teil der Länge der Riemen vorgesehen sind, so dass beim Anheben der Riemenkonstruktion nur dort Formatzuschnitte angehoben und in Y-Richtung abtransportiert werden, wo dies erwünscht ist und dementsprechend die Nocken an der richtigen Position liegen. An anderen Stellen können die Nocken weggefahren sein, so dass die angehobenen Ketten oder Riemen nicht über die Rollen hinausreichen und daher die Formatzuschnitte dort liegen bleiben. Es gibt jedoch auch viele andere denkbare Konstruktionen für eine Winkelstation.

Die nach der Y-Umlenkung erreichte Aufnahmestation wird von dem Manipulationsroboter bedient und ist demzufolge zumindest einem Stapelplatz zugeordnet. Vorzugweise ist im Verlauf der Y-Bewegung der Formatzuschnitte ebenfalls eine Möglichkeit zum Vereinzeln vorgesehen, beispielsweise am Übergang eines ersten Y-Transportbahnstücks, das von der Winkelstation kommt, zu einem unmittelbar zu dem Aufnahmeplatz gehörenden zweiten Y-Transportbahnstück.

Gleichzeitig oder alternativ kann die Transportbahn dazu dienen, eine Mehrzahl in der X-Richtung nebeneinanderliegende Aufnahmestationen und damit indirekt auch jeweils zugeordnete Stapelplätze mit Formatzuschnitten zu versorgen. Im Prinzip können diese verschiedenen Aufnahmestationen und Stapelplätze jeweils einen eigenen Manipulationsroboter aufweisen. Eine erfindungsgemäße translatorische Achse des Manipulationsroboters kann dabei in der Y-Richtung orientiert sein und der Bewegung der Formatzuschnitte von der Aufnahmestation zu dem Stapelplatz dienen. Bevorzugt ist ferner, dass eine translatorische Achse des Manipulationsroboters in X-Richtung liegt und dazu dient, dass der Manipulationsroboter zu zumindest zwei der Aufnahmestationen und Stapelplätze verfahren werden kann.

Daraus kann sich zum einen die Möglichkeit ergeben, mit einem Manipulationsroboter zwei Stapelplätze zu versorgen. Das ist beispielsweise dann attraktiv, wenn im Hinblick auf verschiedene Formatzuschnitttypen und/oder unterschiedliche Stapelbilder zwei oder mehrere Stapelplätze gewünscht sind, ohne dass der Gesamtdurchsatz der Anlage die Verwendung einer Mehrzahl Manipulationsroboter erfordert oder rechtfertigt.

Andererseits können auch zwei oder mehrere Manipulationsroboter verwendet werden, die in einer gewissen flexiblen Zuordnung zu verschiedenen Aufnahmestationen und Stapelplätzen verwendet werden und damit, insbesondere bei kleinerer Zahl von Manipulationsrobotem im Vergleich zur Zahl der Aufnahmestationen und Stapelplätze, eine hohe Flexibilität der Anlage erlauben.

Schließlich kann es sich auch um ein modulares Konzept handeln, was die Erfindung als besonders bevorzugt ansieht. Dabei kann eine Zahl von Stapelplätzen von einer translatorischen Achse des Manipulationsroboters erfasst sein. Diese translatorische Achse kann dann in verschiedenen Ausstattungsvarianten bzw. Ausbaustufen der Anlage mit einem, zwei oder mehreren Manipulationsrobotern versehen sein. In dieser Weise kann beispielsweise eine zunächst nur auf verschiedene Formatzuschnitttypen und Stapelbilder konstruierte Anlage nachträglich auch auf einen höheren Durchsatz bei der Stapelung ausgebaut werden. Hierbei bildet das erfindungsgemäße Konzept translatorischer Roboterachsen ein sehr hohes Maß an Freiheit, weil sich die translatorischen Achsen praktisch beliebig bemessen und auch verlängern lassen und ohne Weiteres das Aneinanderreihen und Nebeneinanderbetreiben verschiedener Manipulationsroboter entlang einer gemeinsamen translatorischen Achse erlauben.

Übrigens muss die Zahl der Aufnahmestationen ebenfalls nicht notwendigerweise der Zahl der Stapelplätze entsprechen. Gewöhnlich wird dies jedoch der Fall sein.

Insgesamt ist es zudem bevorzugt, dass bei entlang der X-Richtung liegender erster Achse die zweite Manipulationsroboterachse in Y-Richtung liegt und die Bewegung zwischen der oder den Aufnahmestationen und dem oder den Stapelplätzen erlaubt. Ferner ist die dritte translatorische Achse vorzugsweise senkrecht, also in einer dann als Z-Richtung zu bezeichnenden Richtung orientiert. Diese dritte Z-Achse kann dann beim Aufnehmen der Formatzuschnitte von den Aufnahmestationen, also beim Abheben in vertikaler Richtung, und entsprechend auch beim Ablegen in vertikaler Richtung auf dem Stapelplatz eingesetzt werden. Natürlich müssen die Bewegungen entlang den drei Achsen dabei nicht getrennt erfolgen, sondern können gleichzeitig und gemischt auftreten. Das gilt natürlich auch für die erwähnten rotatorischen Achsen.

Bei der Abstapelung ist es übrigens bevorzugt, jedoch nicht notwendig, dass die Stapel in dem Sinn lagenweise entstehen, wie die Formatzuschnitte an den Aufnahmestationen ankommen. Die Stapelbilder sollten also vorzugsweise jeweils in der Lagenstärke entstehen, die als bei dem Zerschneiden des ursprünglichen Großformats vorhandene Paketdicke auftritt. Ein neues Stapelbild wird also nur dann begonnen, wenn die vorherige Lage abgeschlossen ist. Es ist jedoch auch denkbar, dass aus bestimmten Gründen von dieser Vorgehensweise abgewichen wird, insbesondere wenn das Stapelbild verschiedene Formatzuschnitte enthalten sollte und diese gerade "unpassend" antransportiert werden.

Ein weiterer bevorzugter Aspekt der Erfindung betrifft einen zusätzlich vorgesehenen Stapelplatz, an dem aus einem einzigen Formatzuschnitt (im horizontalen Sinn) bestehende Stapelbilder abgestapelt werden, also ein Formatzuschnitt auf den anderen bzw. ein Paket von Formatzuschnitten auf das andere gestapelt wird. Dies ist im Allgemeinen bei verhältnismäßig großen Formatzuschnitten der Fall. Dort kann eine ganz konventionelle Stapeltechnik mit einem kammartigen Rechenwagen verwendet werden, die im Übrigen für sich betrachtet Stand der Technik ist. Dieser weitere Stapelplatz kann je nach Schnittplan alternativ oder parallel zu den erfindungsgemäßen Manipulationsrobotern eingesetzt werden.

Die vorstehende Erläuterung ergibt, dass das erfindungsgemäße Konzept translatorischer Manipulationsroboterachsen im Hinblick auf die beschriebene Verwendung nebeneinanderliegender und parallel arbeitender Stapelplätze und auch die soeben erwähnte Ergänzung eines Stapelplatzes für Stapelbilder aus nur einem Formatzuschnitt eine grundsätzlich fast unbeschränkte Flexibilität bietet. Bei der in Folge der Preisgünstigkeit und überragenden Verbreitung von Gelenkrobotern zunächst untersuchten Anordnung von Stapelplätzen um eine erste rotatorische Achse ergeben sich weit geringere Möglichkeiten und störende Widersprüche zwischen den geometrischen Anforderungen an relativ große Arbeitsradien einerseits und den Wünschen nach hoher Arbeitsgeschwindigkeit und hohen zulässigen Lasten andererseits.

Im Folgenden wird ein Ausführungsbeispiel der Erfindung in zwei Detailvarianten dargestellt, das zur Veranschaulichung und weiteren Erläuterung dienen soll. Dabei offenbarte einzelne Merkmale sind daher nur beispielhaft und keineswegs notwendig. Sie können ferner auch in anderen Kombinationen oder jeweils für sich erfindungswesentlich sein.

Figur 1 zeigt eine Draufsicht auf eine erfindungsgemäße Vorrichtung als erstes Ausführungsbeispiel.

Figur 2 zeigt eine weitere Draufsicht auf eine erfindungsgemäße Vorrichtung in einer Variante zu Figur 1 als zweites Ausführungsbeispiel.

Figur 3 zeigt eine Schnittansicht entlang einer X-Richtung zur Verdeutlichung der Vorrichtungen aus den Figuren 1 und 2.

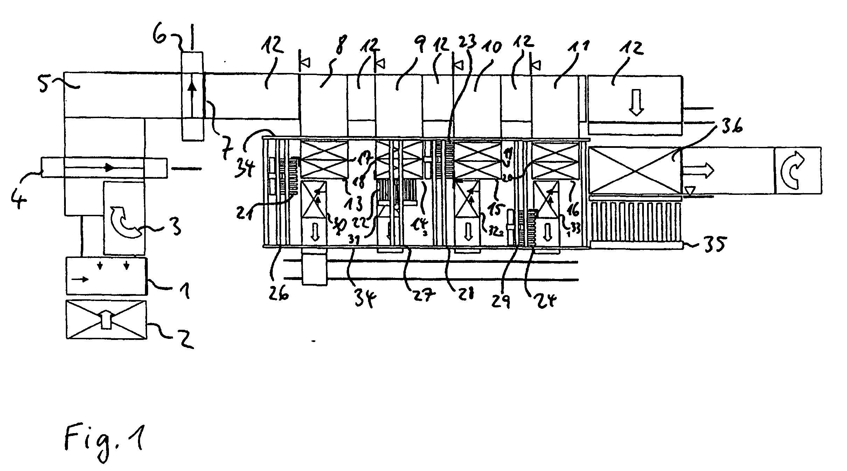

In Figur 1 wird in einer nicht näher dargestellten Weise eine Station 1 mit Plattengroßformaten 2 in Paketlagen von typischerweise einigen wenigen Einzelplatten beschickt. In der Station 1 werden die Großformate 2 den Pfeilen entsprechend auf feste Bezugskanten positioniert, um in einer geometrisch definierten Lage zur weiteren Verarbeitung zur Verfügung zu stehen.

Wie mit dem Pfeil 3 angedeutet, können die Großformate 2 um 90° gedreht werden, was jedoch nicht unbedingt erforderlich ist. Jedenfalls werden in einer Aufteilsäge 4 (Kreissäge) in Querrichtung Aufteilschnitte durch die Großformate 2 vorgenommen. Die Aufteilsäge 4 kann dabei, wenn die dem Pfeil 3 entsprechende Drehung stattgefunden hat, einen sogenannten Kopfschnitt vornehmen, in dem typischerweise kleinere Formatzuschnitte liegen, die dann von einer im Weiteren noch zu beschreibenden zweiten Säge 6 hergestellt werden. Ansonsten führt die Aufteilsäge 4 - gegebenenfalls nach Kopfschnitt und reverser 90°-Drehung - Aufteilschnitte in einer der Längsrichtung der Großformate 2 entsprechenden Richtung der Plattenpakete durch.

Die in dieser Form längs aufgeteilten Plattenpakete und gegebenenfalls auch die durch den Kopfschnitt erzeugten Pakete, werden in einer konventionellen Weise über eine Winkelstation 5 einer zweiten Aufteilsäge 6 zugeführt, die baulich der ersten Aufteilsäge 4 weitgehend entspricht. Diese zweite Aufteilsäge 6 teilt die Kopfschnitte, die in der nach Drehung entsprechend dem Pfeil 3 hergestellten Orientierung verblieben sind, in einzelne Formatzuschnitte kleinerer Abmessungen auf und teilt im Übrigen die in einem zweiten Zyklus längs aufgeteilten Plattenpakete in der der Querrichtung der ursprünglichen Großformate 2 entsprechenden Richtung auf. Dabei können die durch die Längsaufteilung durch die Aufteilsäge 4 erzeugten "Streifen" durch nicht näher dargestellte Schieber gegeneinander in der Längsrichtung verschoben werden, wenn der Schnittplan an entsprechenden Stellen keine durchgehenden Querschnittlinien vorsieht.

Beide Aufteilsägen 4 und 6 arbeiten mit einer jeweiligen Referenzkante. Bei der ersten Aufteilsäge 4 ist dies die in Transportrichtung rechte Kante, wie durch den verstärkten Strich an der Station 1 dargestellt. Bei der zweiten Aufteilsäge 6 ist dies die in Transportrichtung links liegende Kante, die ebenfalls verstärkt gezeichnet ist.

Die am Ausgang der zweiten Aufteilsäge 6 erkennbare Referenzkante 7 entspricht einer Vereinzelung in der in Figur 1 der Horizontalen entsprechenden Richtung, die die X-Richtung darstellt. Dies bedeutet, dass in X-Richtung zu vereinzelnde Formatzuschnitte nach dem Aufteilen durch die zweite Aufteilsäge 6 mit ihrer Stoßkante auf die Referenzkante 7 gefahren werden, woraufhin der stromaufwärtige Teil angehalten und der stromabwärtige Teil weitertransportiert wird. Bei der konkreten Ausführung entspricht die Referenzkante der Sägelinie der Säge 6.

Die stromabwärts von der Referenzkante 7 liegende Transportbahn 12 in X-Richtung besteht aus einer konventionellen Rollenbahn mit insgesamt vier Winkelstationen 8 - 11. Jede der Winkelstationen 8 - 11 hat eine jeweils an ihrem Anfang liegende und durch die dreieckigen Teile symbolisierte Referenzkante, die bereits der Referenzposition in X-Richtung für die spätere Abstapelung entspricht.

Die Y-Richtung entspricht in Figur 1 der Vertikalen. Die Y-Bewegung in den Winkelstationen 8 - 11 wird realisiert durch eine zwischen den Rollen der Rollentransportbahn 12 versenkbare Riementransportbahn, deren Riemen im oberen Trum nach oben (in Z-Richtung im Sinne dieser Beschreibung) weisende Nocken tragen, die nur einen etwa der Breite der Transportbahn 12 entsprechenden Teil der Gesamtlänge der Riemen ausmachen. Die Riementransportbahnen erstrecken sich jedoch von der in Transportrichtung linken Kante der Transportbahn 12 in Y-Richtung bis zu einer Referenzkante 17 - 20 einer jeweiligen Aufnahmestation 13 - 16. Dadurch können die Riementransportbahnen in Y-Richtung durch individuelle Ansteuerung einzelner Riemen oder Riemengruppen innerhalb jeder der Winkelstationen 8 - 11 einen Teil der im Bereich der Winkelstationen 8 - 11 liegenden Formatzuschnitte mit Hilfe der Noppen selektiv anheben und in Y-Richtung (in Figur 1 vertikal nach unten) wegtransportieren. Dies ist regelmäßig der der jeweiligen Referenzkante benachbarte Teil, während in X-Richtung stromabwärts liegende Teile der Formatzuschnitte gegebenenfalls liegen bleiben und weitertransportiert werden können. Damit können die Winkelstationen 8 - 11 aus den von der Transportbahn 12 angelieferten und an der Referenzkante 7 bereits in X-Richtung vereinzelten Formatzuschnitten einzelne Gruppen auswählen. Diese Gruppen werden an der Referenzkante 17 - 20 in entsprechender Weise in Y-Richtung vereinzelt. Dazu sind die Riementransportbahnen jeweils an diesen Referenzkanten aufgeteilt und getrennt steuerbar.

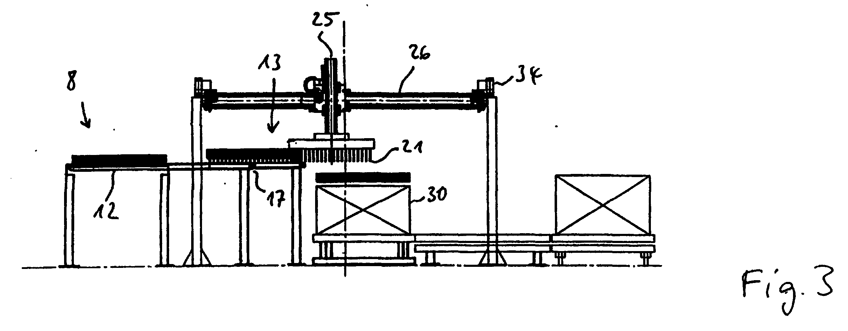

Ergänzend wird hierzu auf den in X-Richtung gesehenen Querschnitt aus Figur 3 verwiesen. Links ist dort die Transportbahn 12 im Bereich einer der Winkelstationen 8 - 11 zu sehen; rechts davon die Riementransportbahn bis zur Referenzkante 17 und die eigentliche Aufnahmestationen 13.

Die Formatzuschnittpakete liegen also an der eigentlichen Aufnahmestation 13 - 16 in X-Richtung und in Y-Richtung vereinzelt und auf die Referenzkante der Winkelstation 8 - 11 positioniert vor. Ferner sind sie in Y-Richtung auf die stromabwärtige Kante des Aufnahmeplatzes 13 - 16 positioniert.

Die Formatzuschnittpakete können nun von einem rechenartigen Aufnehmer 21 - 24 aufgenommen werden. Zum einen weist die Aufnahmestation 13 - 16 dazu zwischen den Riemen versenkbare Stifte (in Fig. 3 angedeutet) auf, mit denen die Formatzuschnittpakete über die Riemen angehoben werden. Diese Stifte haben dabei sowohl in X-Richtung als auch in Y-Richtung passende Zwischenräume, um die einzelnen "Schwerter" oder Zinken des Rechens 21 zwischenschieben zu können.

Der Rechenaufnehmer 21 - 24 hängt an einer in Z-Richtung (also der Vertikalen, d.h. der Senkrechten zur Papierebene in Figur 1) verfahrbaren translatorischen Roboterachse und kann von dieser abgesenkt und angehoben werden. Dies ist in Figur 3 mit 25 bezeichnet. Diese Z-Roboterachse 25 ist drehbar um die Z-Achse an einer Y-Traverse 26 - 29 aufgehängt und entlang der durch diese gebildeten translatorischen Y-Achse verfahrbar. Dadurch kann der Rechenaufnehmer 21 - 24 zwischen den Aufnahmestationen 13 - 16 und den im Folgenden noch beschriebenen Stapelplätzen 30 - 33 verfahren werden.

Die jeweiligen Y-Traversen 26 - 29 sind wiederum in X-Richtung entlang einem Portalrahmen 34 verfahrbar, der somit eine durchgehende translatorische X-Achse bildet.

Es handelt sich also insgesamt in diesem Beispiel um ein bis vier Manipulationsroboter, je nach Ausbaustufe, mit jeweiligem Rechenaufnehmer 21 - 24, jeweiligen dritten translatorischen und rotatorischen Z-Achsen 25 (die übrigen drei nicht bezeichnet), jeweiligen zweiten Y-Achsen 26 - 29 und einer gemeinsamen ersten X-Achse 34. Es handelt sich insgesamt also um einen bis zu vierfachen Flächenportalroboter mit einheitlicher X-Achse. Wie erwähnt, sind die einzelnen Rechenaufnehmer 21 - 24 um die jeweilige Z-Achse verdrehbar, weisen also eine zusammen mit der dritten translatorischen Achse realisierte weitere rotatorische Achse auf.

Die Rechenaufnehmer 21 - 24 führen die in der beschriebenen Weise positionierten Formatzuschnitte auf den Aufnahmestationen 13 - 16 den in Figur 1 und in Figur 3 erkennbaren Stapelplätzen 30 - 33 zu. In Figur 3 sind zur Veranschaulichung auf dem Stapelplatz 30 aber auch auf dem Aufnahmeplatz 13 sowie stromaufwärts von der Referenzkante 17 und auf der Transportbahn 12 jeweils ausgefüllt dargestellte Formatzuschnittpakete eingezeichnet.

Die Stapelplätze 30 - 33 sind so ausgelegt, dass die Stapelebene (in Z-Richtung) jeweils unter dem Z-Niveau der Aufnahmestation 13 - 16 liegt, so dass sich der jeweilige Aufnahmerechen 21 - 24 über dem jeweiligen Stapelplatz 30 - 33 drehen kann. Somit kann der Aufnahmerechen 23 - 24 die Formatzuschnitte von der Aufnahmestation 13 - 16 von zwei Seiten aus aufnehmen.

Beim Ablegen auf den jeweiligen Stapelplatz 30 - 33 wird auf die in Figur 1 jeweils obere linke Ecke positioniert, wenn das jeweils erste Teil einer neuen Stapelebene, also eines neuen Stapelbildes, abgelegt wird. Die anfänglichen Referenzkanten sind also die Referenzkanten der zugehörigen Winkelstationen 8 - 11 einerseits und die stromaufwärtige Kante des jeweiligen Stapelplatzes 30 - 33 andererseits. Die weiteren Teile eines Stapelbildes werden in entsprechender Weise an die bereits vorhandenen Teile angelegt und zuvor bei Bedarf gedreht.

Wenn ein Stapelbild fertig ist, fährt eine Hebebühne des jeweiligen Stapelplatzes 30 - 33 entsprechend in Z-Richtung abwärts, um wiederum eine ausreichend niedrig liegende Oberkante für die nächste Stapellage zur Verfügung zu stellen. Wenn der Stapel insgesamt fertig ist, wird er in Y-Richtung in der durch die Pfeile (in Figur 1 unterhalb der Stapelplätze) dargestellten Weise zu einer auf Schienen verfahrbaren Transporteinrichtung gebracht, die die fertigen Stapel in an sich bekannter Weise abtransportiert.

Die Einzelheiten der Konstruktion des Rechenaufnehmers 21 - 24 sind nicht zeichnerisch dargestellt. Tatsächlich sind neben den eingezeichneten Rechenzinken quer dazu verlaufende Anschlagleisten vorgesehen, die jeweils in Richtung der Zinken verschieblich sind. Die auf Seiten der Zinkenenden liegende dieser Leisten ist klappbar, um beim Einführen der Zinken zwischen die zuvor erwähnten Stifte beim Aufnehmen von Formatzuschnitten nicht zu stören. Mit den beiden Leisten können die aufgenommenen Zuschnitte geklammert werden, um eine schnelle Bewegung der Manipulationsroboter ohne Verrutschen oder Herunterfallen von Formatzuschnitten zu ermöglichen.

Beim Ablegen wird die klappbare Leiste hochgeklappt und werden die Formatzuschnitte unter Zuhilfenahme mit der anderen Leiste von den Rechenzinken abgestreift. Dabei sind die Rechenzinken zu ihren Enden hin (in Z-Richtung) spitz zulaufend und außerdem etwas um eine horizontale und senkrecht zu der Zinkenrichtung verlaufenden Achse (also eine weitere rotatorische Roboterachse) kippbar ausgestaltet, um das Abstreifen der Formatzuschnitte von den Rechenzinken zu erleichtern.

Im Übrigen werden die fertigen Stapelbilder auf den Stapeln nach dem bereits erwähnten Absenken des jeweiligen Stapelplatzes 30 - 33 noch einmal von den Außenseiten her zusammengeschoben und dabei zentriert, um etwaige durch das Ablegen entstandene Lücken zwischen Stapelbildteilen auszugleichen.

Einige der Formatzuschnitte können über die gesamte Länge der Transportbahn 12, also über alle vier Winkelstationen 8 - 11 hinaus, zu einem letzten Transportbahnstück gebracht werden, das von einem an sich konventionellen und im Vergleich zu den beschriebenen Aufnahmerechen 21 - 24 großen Rechenwagen 35 bedient wird. Dieser Rechenwagen kann durch Zwischenschieben seiner Rechenzinken zwischen die Rollen der Transportbahn 12 Formatzuschnitte aufnehmen und auf einen Stapelplatz 36 ablegen. Dieser Abstapelvorgang ist an sich völlig konventionell und nur für solche Formatzuschnitte gedacht, die einzeln (im horizontalen Sinn, also durchaus als vertikales Paket) bereits ein Stapelbild ausmachen sollen. Auf dem Stapelplatz 36 werden also keine Stapelbilder zusammengestellt. Die entstehenden Stapel werden in der durch Pfeile bezeichneten Weise in X-Richtung ausgefahren und dann aus hier nicht näher interessierenden Gründen gedreht. Die Stapel sind dabei auf die in X-Richtung bzw. auch in Y-Richtung jeweils stromabwärtige Kante des Stapelplatzes 36 ausgerichtet.

Insgesamt weist die erfindungsgemäße Vorrichtung aus Figur 1 also fünf Stapelplätze auf, von denen vier durch erfindungsgemäße Manipulationsroboter bedient werden, während der fünfte Stapelplatz mangels Notwendigkeit des Zusammenstellens von Stapelbildem konventionell ist.

Die in Figur 1 dargestellte Vorrichtung ist mit vier Manipulationsrobotem bestückt, könnte jedoch im Prinzip auch mit einem, zwei oder drei Manipulationsrobotem bedient werden. Diese müssten sich dann durch Verfahren entlang der X-Achse des Portalrahmens 34 die zu versorgenden Stapelplätze 30 - 33 in entsprechender Weise aufteilen. Insbesondere können bei einer zu Anfang mit einem oder einer kleineren Zahl von Manipulationsrobotem ausgestatteten Vorrichtung nachträglich Manipulationsroboter an der bereits bestehenden gemeinsamen Portalkonstruktion 34 ergänzt werden. Die Vorrichtung ist also modular aufgebaut.

Man erkennt im Übrigen, dass das Grundprinzip der Vorrichtung in den Richtungen der translatorischen Achsen, insbesondere in der X-Richtung quasi beliebig erweiterbar ist. Dies hat nicht nur den Vorteil, dass nachträglich weitere Stapelplätze angebaut werden könnten (wobei im vorliegenden Fall der Fig. 1 der konventionelle Stapelplatz 36 mit den zugehörigen Bestandteilen der Vorrichtung verschoben werden müsste). Es ist außerdem von Vorteil, für verschieden groß ausgelegte Vorrichtungen die gleichen Grundbestandteile und Konstruktionsprinzipien einsetzen zu können. Es können also individuelle Vorrichtungen aus Baukastenteilen zusammengestellt werden.

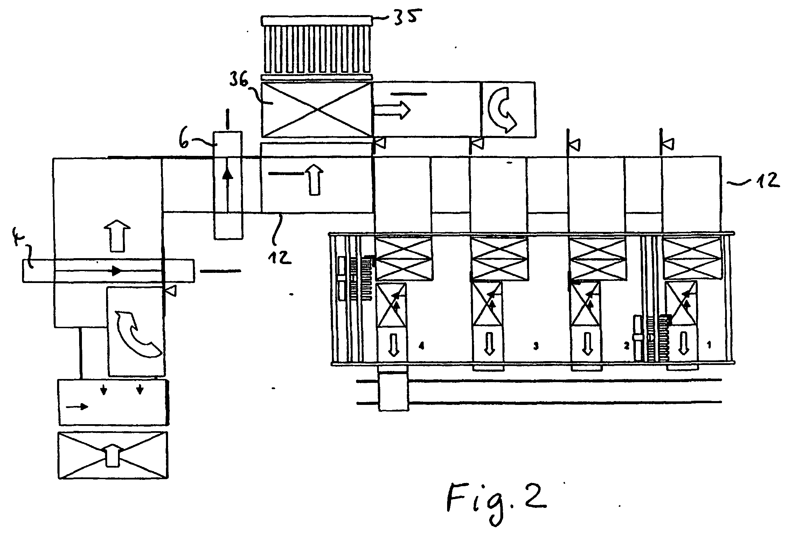

Figur 2 zeigt eine Variante zu Figur 1, die sich in zweierlei Hinsicht unterscheidet. Zum einen sind zur Verdeutlichung nur zwei Manipulationsroboter eingezeichnet. Zum zweiten ist der an sich bereits beschriebene Stapelplatz 36 hier nicht am Ende, sondern in Y-Richtung neben dem Anfang der Transportbahn 12 angeordnet. Damit ist diese Anlage in X-Richtung kürzer und in Y-Richtung etwas breiter als die aus Figur 1, was je nach baulichen Gegebenheiten von Vorteil sein kann. Im Übrigen müssen die auf dem Stapelplatz 36 abzustapelnden Formatzuschnitte nicht entlang der gesamten Länge der Transportbahn 12 fahren.

Beide Varianten haben je nach Anwendung ihre spezifischen Vorteile, unterscheiden sich jedoch in ihrer grundsätzlichen Arbeitsweise nicht voneinander.

Zur Verdeutlichung der Zeichnung sind in Figur 2 nur wenige Bezugsziffern eingezeichnet. Die Einzelheiten entsprechen aber identisch Figur 1.

## Patentansprüche

1. Verfahren zum Abstapeln von Formatzuschnitten aus Platten (2) auf einem Stapelplatz (30-33) zu einem Stapel
mit den Schritten:
- Transportieren der Formatzuschnitte zu einer Mehrzahl Aufnahmestationen (13 - 16) mit einer Transportbahn (12) entlang einer X-Richtung, wobei die Aufnahmestationen (13 - 16) einem jeweiligen Stapelplatz (30 - 33) zugeordnet, in der X-Richtung nebeneinander angeordnet und einer jeweiligen Winkelstation (8 - 11) der Transportbahn (12) zum Umlenken der Formatzuschnitte in eine zu der X-Richtung senkrechte Y-Richtung zugeordnet sind,
- Aufnehmen der Formatzuschnitte mit einem Manipulationsroboter (21 - 29, 34) an den Aufnahmestationen (13 - 16),
- Zuführen der Formatzuschnitte zu dem Stapelplatz (30 - 33) mit dem Manipulationsroboter (21 - 29, 34),
- Ablegen der Formatzuschnitte auf dem Stapelplatz (30 - 33) mit dem Manipulationsroboter (21 - 29, 34) in solcher Weise, dass bei dem Ablegen mit den Formatzuschnitten ein Stapelbild des Stapels zusammengestellt wird,
wobei der Manipulationsroboter (21 - 29, 34) drei translatorische Achsen aufweist und entlang der ersten translatorischen Achse (34) entlang der X-Richtung verschoben wird, um die jeweiligen Aufnahmestationen (13 - 16) und die jeweiligen Stapelplätze (30 - 33) zu erreichen, der Manipulationsroboter (21 - 29, 34) entlang der zweiten translatorischen Achse (26 - 29) entlang der Y-Richtung verschoben wird, um sich von einer Aufnahmestation (13 - 16) zu dem jeweiligen zugeordneten Stapelplatz (30 - 33) und umgekehrt zu bewegen, und sich der Manipulationsroboter (21 - 29, 34) entlang der dritten translatorischen Achse (25) senkrecht zu der X-Richtung und zu der Y-Richtung bewegt, um Formatzuschnitte von einer Aufnahmestation (13 - 16) aufzunehmen und um Formatzuschnitte auf einem Stapelplatz (30 - 33) abzulegen.

2. Verfahren nach Anspruch 1, bei dem das Stapelbild bei dem Ablegen lagenweise zusammengestellt wird, wobei die Lagen, in denen die Zusammenstellung erfolgt, den zugeführten Formatzuschnitten entsprechen.

3. Verfahren nach Anspruch 1 oder 2, bei dem der Manipulationsroboter (21 - 29, 34) eine rotatorische Achse aufweist, mit deren Hilfe mit einem Manipulationswerkzeug (21 - 24) des Manipulationsroboters (21 - 29, 34) Formatzuschnitte beim Zusammenstellen des Stapelbildes gedreht werden, wenn dies das Stapelbild erfordert.

4. Vorrichtung zum Abstapeln von Formatzuschnitten aus Platten (2) auf einem Stapelplatz (30 - 33) zu einem Stapel mit
einem Stapelplatz (30 - 33),
einem Manipulationsroboter (21 - 29, 34), der dazu ausgelegt ist, Formatzuschnitte aufzunehmen, dem Stapelplatz (30 - 33) zuzuführen und auf dem Stapelplatz (30 - 33) in solcher Weise abzulegen, dass bei dem Ablegen mit den Formatzuschnitten ein Stapelbild des Stapels zusammengestellt wird,
einer Mehrzahl Aufnahmestationen (13 - 16) und einer Transportbahn (12) zum Transportieren von Formatzuschnitten zu den jeweiligen Aufnahmestationen (13 - 16) entlang einer X-Richtung, wobei die Aufnahmestationen (13 - 16) einem jeweiligen Stapelplatz (30 - 33) zugeordnet, in der X-Richtung nebeneinander angeordnet und einer jeweiligen Winkelstation (8 - 11) der Transportbahn (12) zum Umlenken der Formatzuschnitte in eine zu der X-Richtung senkrechte Y-Richtung zugeordnet sind,
wobei der Manipulationsroboter drei translatorische Achsen (25 - 29, 34) aufweist,
wobei die erste translatorische Achse (34) des Manipulationsroboters (21 - 29, 34) entlang der X-Richtung orientiert ist und der Manipulationsroboter (21 - 29, 34) entlang der ersten Achse (34) verschoben werden kann, um die jeweiligen Aufnahmestationen (13 - 16) und die jeweiligen Stapelplätze (30 - 33) zu erreichen, die zweite translatorische Achse (26 - 29) des Manipulationsroboters (21 - 29, 34) entlang der Y-Richtung orientiert ist und der Manipulationsroboter (21 - 29, 34) entlang der zweiten Achse (26 - 29) verschoben werden kann, um sich von einer Aufnahmestation (13 - 16) zu dem jeweiligen zugeordneten Stapelplatz (30 - 33) und umgekehrt zu bewegen, und die dritte translatorische Achse (25) des Manipulationsroboters (21 - 29, 34) senkrecht zu der X-Richtung und zu der Y-Richtung orientiert ist und sich der Manipulationsroboter (21 - 29, 34) entlang der dritten Achse (25) bewegen kann, um Formatzuschnitte von einer Aufnahmestation (13 - 16) aufzunehmen und um Formatzuschnitte auf einem Stapelplatz (30-33) abzulegen.

5. Vorrichtung nach Anspruch 4, bei der die Transportbahn (12) ausgelegt ist zum Transportieren von Formatzuschnitten von einer Trennvorrichtung (6) zum Zuschneiden der Formatzuschnitte zu den Aufnahmestationen (13 - 16),
wobei die Transportbahn (12) Gruppen von Formatzuschnitten zwischen dem Zerschneiden und dem Umlenken in X-Richtung an den Winkelstationen (8 - 11) vereinzeln (7) kann
und zwischen dem Umlenken und dem Aufnehmen in Y-Richtung vereinzeln (17 - 20) kann.

6. Vorrichtung nach einem der Ansprüche 4 und 5, bei der ein weiterer Stapelplatz (36) vorgesehen ist, auf dem Formatzuschnitte durch eine von dem Manipulationsroboter (21 - 29, 34) verschiedene Stapeleinrichtung (35) abgestapelt, jedoch nicht nebeneinander abgelegt werden können, wobei das dortige Stapelbild aus einem einzigen der Formatzuschnitte besteht.

7. Vorrichtung nach einem der Ansprüche 4 - 6, bei der der Manipulationsroboter (21 - 29, 34) eine rotatorische Achse aufweist, mit deren Hilfe mit einem Manipulationswerkzeug (21 - 24) des Manipulationsroboters (21 - 29, 34) Formatzuschnitte beim Zusammenstellen des Stapelbildes gedreht werden können, wenn dies das Stapelbild erfordert.

8. Verfahren zur Herstellung einer Vorrichtung nach einem der Ansprüche 4 - 7, bei der ein weiterer Manipulationsroboter (21- 29) in der Weise zu zumindest einem vorhandenen Manipulationsroboter (21 - 29, 34) der Vorrichtung hinzugebaut wird, dass die beiden Manipulationsroboter (21 - 29, 34) entlang einer gemeinsamen translatorischen Achse (34) in X-Richtung verfahrbar sind.

## Claims

1. A method of stacking pieces cut to size from boards (2), on a stacking bin (30 - 33) to produce a stack
comprising the steps:
- transporting said cut-to-size pieces to a plurality of receiving stations (13 - 16) by means of a conveyor (12) along a X-direction, said receiving station (13 - 16) being allocated each to a respective stacking bin (30 - 33), being arranged one beside the other along said X-direction, and being allocated each to a respective angular station (8 - 11) of said conveyor (12) for turning said cut-to-size pieces in a Y-direction being perpendicular to said X-direction,
- taking said cut-to-size pieces by means of a manipulation robot (21 - 29, 34) at said receiving stations (13 - 16),
- supplying said cut-to-size pieces to said stacking bin (30 - 33) by means of said manipulation robot (21 - 29, 34),
- placing said cut-to-size pieces on said stacking bin (30 - 33) by means of said manipulation robot (21 - 29, 34) such that during said placing a stacking pattern of said stack is collated,
wherein said manipulation robot (21 - 29, 34) comprises three translational axes and is displaced along the first translational axis (34) along said X-direction to reach said respective receiving stations (13 - 16) and said respective stacking bins (30 - 33), said manipulation robot (21 - 29, 34) being displaced along the second translational axis (26 - 29) along said Y-direction to move from a receiving station (13 - 16) to the respective allocated stacking bin (30 - 33) and vice versa, and said manipulation robot (21 - 29, 34) being moved along the third translational axis (25) perpendicular to said X-direction and to said Y-direction to take cut-to-size pieces from a receiving station (13 - 16) and to place cut-to-size pieces on a stacking bin (30 - 33).

2. A method according to claim 1 in which said stacking pattern is collated in said placing layer by layer, said layer of said collation corresponding to said supplied cut-to-size pieces.

3. A method according to claim 1 or 2 in which said manipulation robot (21 - 29, 34) comprises a rotational axis by means of which cut-to-size pieces are rotated during collation of said stacking pattern using a manipulation tool (21 - 24) of said manipulation robot (21 - 29, 34), if said stacking pattern requires to do so.

4. An apparatus for stacking pieces cut to size from boards (2) on a stacking bin (30 - 33) to produce a stack, comprising
a stacking bin (30 - 33),
a manipulation robot (21 - 29, 34) being adapted to take cut-to-size pieces, supply them to said stacking bin (30 - 33) and place them on said stacking bin (30 - 33) such that during said placing a stacking pattern of said stack is collated,
a plurality of receiving stations (13 - 16) and a conveyor (12) for conveying cut-to-size pieces to the respective receiving stations (13 - 16) along a X-direction, said receiving stations (13 - 16) being allocated each to a respective stacking bin (30 - 33), being arranged one beside another along said X-direction, and being allocated each to a respective angular station (18 - 11) of said conveyor (12) for turning said cut-to-size pieces into an Y-direction being perpendicular to said X-direction,
wherein said manipulation robot comprises three translational axes (25 - 19, 34), the first translational axis (34) of said manipulation robot (21 - 29, 34) being oriented along said X-direction, wherein said manipulation robot (21 - 29, 34) being displaceable along said first axis (34) to reach said respective receiving stations (13 - 16) and said respective stacking bins (30 - 33), said second translational axis (26 - 29) of said manipulation robot (21 - 29, 34) being oriented along said Y-direction, wherein said manipulation robot (21 - 29, 34) being displaceable along said second axis (26 - 29) to move from a receiving station (13 - 16) to the respective allocated stacking bin (30 - 33) and vice versa, and said third translational axis (25) of said manipulation robot (21 - 29, 34) being oriented perpendicular to said X-direction and to said Y-direction, wherein said manipulation robot (21 - 29, 34) being displaceable along said third axis (25) to take cut-to-size pieces from a receiving station (13 - 16) and place cut-to-size pieces on a stacking bin (30 - 33).

5. An apparatus according to claim 4 in which said conveyor (12) is adapted to convey cut-to-size pieces from a cutting device (6) for cutting said pieces to size to said receiving stations (13 - 16),
wherein said conveyor (12) can separate (7) groups of cut-to-size pieces between said cutting and said turning in said X-direction at said angular stations (8 - 11)
and can separate (17 - 20) said groups between said turning and said receiving in said Y-direction.

6. An apparatus according to one of claims 4 to 5 comprising a further stacking bin (36) on which cut-to-size pieces can be stacked by means of stacking means (35) being different from said manipulation robot (21 - 29, 34), but can not be placed beside each other, wherein the stacking pattern here consists of one single of said cut-to-size pieces.

7. An apparatus according to one of claims 4 to 6 in which said manipulation robot (21 - 29, 34) comprises a rotational axis by means of which cut-to-size pieces can be rotated during collation of said stacking pattern using a manipulation tool (21 - 24) of said manipulation robot (21 - 29, 34), if said stacking pattern requires to do so.

8. A method of producing a device according to one of claims 4 to 7 in which a further manipulation robot (21 - 29) is added to at least one existing manipulation robot (21 - 29, 34) of said device such that both manipulation robots (21 - 29, 34) are displaceable along a common translational axis (34) in X-direction.

## Revendications

1. Procédé d'empilement de pièces découpées à partir de panneaux (2) sur un emplacement d'empilement (30-33) pour former une pile
avec les étapes suivantes :
- transport des pièces découpées vers un certain nombre de stations de réception (13-16) à l'aide d'une voie de transport (12) le long d'un axe X, les stations de réception (13-16) étant affectées chacune à un emplacement d'empilement (30-33), disposées l'une après l'autre sur l'axe des X et affectées chacune à une station angulaire (8-11) de la voie de transport (12) pour déviation des pièces découpées dans une direction Y perpendiculaire à la direction X.
- saisi des pièces découpées à l'aide d'un robot manipulateur (21 - 29, 34) aux stations de réception (13-16).
- transfert des pièces découpées vers l'emplacement d'empilement (30-33) à l'aide du robot manipulateur (21-29, 34).
- dépose des pièces découpées sur l'emplacement d'empilement (30-33) à l'aide du robot manipulateur (21 -29, 34) de telle manière que lors de la dépose, un plan de pile prédéfini soit constitué.
le robot manipulateur (21-29, 34) présentant trois axes de translation, pour pouvoir être déplacé le long du premier axe de translation (34) le long de la direction X, pour atteindre les différentes stations de réception (13-16) et les emplacements d'empilement correspondants (30 -33), le robot manipulateur (21-29, 34) pouvant être déplacé le long du deuxième axe de translation (26-29) le long de la direction Y, pour pouvoir se déplacer depuis une station de réception (13-16) vers l'emplacement d'empilement (30-33) correspondant, et inversement, le robot manipulateur (21-29, 34) pouvant être déplacé le long du troisième axe de translation (25) perpendiculairement à la direction X et à la direction Y, pour prendre des pièces découpées sur une station de réception (13-16) et poser des pièces découpées sur un emplacement d'empilement (30-33).

2. Procédé selon la revendication 1, pour lequel le plan de pile est formé couche par couche lors de la pose, les couches selon lesquelles s'effectue la juxtaposition correspondant aux pièces découpées transférées.

3. Procédé selon la revendication 1 ou 2, pour lequel le robot manipulateur (21 -29, 34) présente un axe de rotation, à l'aide duquel un outil de manipulation (21 -24) du robot manipulateur (21-29, 34) fait tourner les pièces découpées lors de la formation du plan de pile, lorsque celui-ci l'exige.

4. Installation pour l'empilement de pièces découpées à partir de panneaux (2) sur un emplacement d'empilement (30 - 33) pour former une pile avec
un emplacement d'empilement (30 - 33)
un robot de manipulation (21-29, 34) destiné à saisir des pièces découpées, à les transférer sur un emplacement d'empilement (30 - 33) et à les disposer sur l'emplacement (30 - 33) de telle manière que lors de la dépose, un plan de pile prédéfini soit constitué,
un certain nombre de stations de réception (13-16) et une voie de transport (12) pour le transport des pièces découpées vers les stations de réception (13 - 16) correspondantes le long d'un axe X, les stations de réception (13-16) étant affectées chacune à un emplacement d'empilement (30-33), disposées l'une après l'autre sur l'axe des X et affectées chacune à une station angulaire (8-11) de la voie de transport (12) pour déviation des pièces découpées dans une direction Y perpendiculaire à la direction X.
le robot manipulateur présentant trois axes de translation (25-29, 34), le premier axe de translation (34) du robot manipulateur (21-29, 34) correspondant à la direction X, et le robot manipulateur (21-29, 34) pouvant être déplacé le long du premier axe (34) pour atteindre les différentes stations de réception (13-16) et les emplacements d'empilement correspondants (30 -33), le deuxième axe de translation (26-29) du robot manipulateur (21-29, 34) correspondant à la direction Y et le robot manipulateur (21-29, 34) pouvant être déplacé le long du deuxième axe de translation (26-29), pour pouvoir se déplacer depuis une station de réception (13-16) vers l'emplacement d'empilement correspondant (30-33), et inversement, et le troisième axe de translation (25) du robot manipulateur (21-29, 34) étant orienté perpendiculairement à la direction X et à la direction Y, le robot manipulateur (21-29, 34) pouvant être déplacé le long du troisième axe de translation (25), pour prendre des pièces découpées sur une station de réception (13-16) et poser des pièces découpées sur un emplacement d'empilement (30-33).

5. Installation selon la revendication 4, pour laquelle la voie de transport (12) est destinée à transporter des pièces découpées depuis une installation de découpe (6) des pièces découpées vers les stations de réception (13-16).
la voie de transport (12) pouvant séparer (7) dans la direction X des groupes de pièces découpées entre la découpe et les bifurcations aux stations angulaires (8-11)
et pouvant les séparer (17-20) entre la toumement et la réception dans la direction Y.

6. Installation suivant l'une des revendications 4 et 5, un emplacement d'empilement (36) supplémentaire étant prévu, sur lequel peuvent être empilées, mais non disposées côte à côte, des pièces découpées à l'aide d'un autre dispositif d'empilement (35) du robot manipulateur (21 - 29, 34), le plan de pile n'étant constitué que d'un seul type de pièce découpée.

7. Installation suivant l'une des revendications 4-6, pour lequel le robot manipulateur (21 -29, 34) présente un axe de rotation, à l'aide duquel un outil de manipulation (21 -24) du robot manipulateur (21-29, 34) fait tourner les pièces découpées lors de la formation du plan de pile, lorsque celui-ci l'exige.

8. Procédé pour la fabrication d'une installation suivant l'une des revendications 4 - 7, pour laquelle un autre robot de manipulation (21 - 29) est accolé à au moins un des robots manipulateurs existants (21-29, 34) de telle manière que les deux robots manipulateurs (21-29, 34) puissent se déplacer le long d'un axe de translation commun (34) dans la direction X.
